# EUROPÄISCHE PATENTANMELDUNG

(11) **EP 1 625 930 A2**
(43) Veröffentlichungstag der Anmeldung: **15.02.2006**
(21) Anmeldenummer: 05106864.1
(22) Anmeldetag: 26.07.2005
(51) Int. Cl.: B29D 22/00

(54) **Fluidbefüllbarer, volumsveränderbarer Körper**

(30) Priorität: 11.08.2004 AT 13662004
(71) Anmelder: Hoerbiger Automatisierungstechnik Holding GmbH, 86972 Altenstadt (DE)
(72) Erfinder: Dörfler, Erich, 86899, Landsberg - Erpfting (DE)
(74) Vertreter: Pinter, Rudolf

(57) **Zusammenfassung**

Ein fluidbefüllbarer, volumsveränderbarer Körper besteht aus zumindest zwei übereinanderliegenden, miteinander entlang zumindest einer geschlossenen Kurve, vorzugsweise des umlaufenden Randes, verschweißten Folien, vorzugsweise aus Kunststoffmaterial.

Um für derartige Körper die Belastung des Folienmaterials zu vermindern und eine Erhöhung der Dauerfestigkeit zu erreichen, liegen die Folien (1, 2) an der dem fluidbefüllbaren Volumen (V) gegenüberliegenden Seite des verschweißten Randes (R) m wesentlichen parallel aneinander und schließen in unbefülltem Zustand des Körpers auf der dem fluidbefüllbaren Volumen (V) zugewandten Seite miteinander einen Winkel größer 0° ein.

## Beschreibung

Die Erfindung betrifft einen fluidbefüllbaren, volumsveränderbaren Körper, bestehend aus zumindest zwei übereinanderliegenden, miteinander entlang zumindest einer geschlossenen Kurve, vorzugsweise des umlaufenden Randes, verschweißten Folien, vorzugsweise aus Kunststoffmaterial.

Für die Herstellung von beispielsweise Lordoseblasen oder ähnlichen aufblasbaren Blasen, speziell im Bereich der Fahrzeug-Komfortsitze, ist es üblich, die parallel übereinanderliegenden Folien durch Verschweißen an zumindest den Rändern zu verbinden. Auch nach dem Schweißvorgang liegen die beiden Folien parallel übereinander, so daß bei Befüllen der Blase die Folien unmittelbar neben der Schweißnaht stark verbogen werden, im Extremfall bei vollständiger Befüllung bis zu 90°. Dies führt zu einer starken Belastung des Folienmaterials und zu einer Verminderung der Dauerfestigkeit dieser Blasen.

Es war daher die Aufgabe der vorliegenden Erfindung eine Folienblasen-Konstruktion und ein dafür geeignetes Herstellungsverfahren anzugeben, welche zu einer Verminderung der Belastung des Folienmaterials, insbesonders bei oftmals und/oder in kurzen Intervallen be- und entlüfteten Blasen, und zu einer Erhöhung der Dauerfestigkeit führen.

Zur Lösung dieser Aufgabe ist ein Körper wie eingangs beschrieben , dadurch gekennzeichnet, daß die Folien an der dem fluidbefüllbaren Volumen gegenüberliegenden Seite des verschweißten Randes im wesentlichen parallel aneinanderliegen und in unbefülltem Zustand des Körpers auf der dem fluidbefüllbaren Volumen zugewandten Seite miteinander einen Winkel größer 0° einschließen. Damit wird die Verbiegung der Folien bei der Befüllung der Blase und damit die Belastung des Folienmaterials deutlich vermindert.

Wenn gemäß einer vorteilhaften Ausführungsform der Erfindung die Folien einen Winkel von zumindest etwa 30°, vorzugsweise von etwa 45°, einschließen, ist eine Anordnung gegeben, bei welcher in mittlerem Befüllungszustand die Folien im Bereich der Schweißnaht weitestgehend unverbogen und damit unbelastet sind. Sowohl im gänzlich entleerten und auch im gänzlich befüllten Zustand hingegen ist die Verbiegung und damit Belastung jeweils deutlich vermindert.

Beim Verfahren zur Herstellung eines fluidbefüllbaren, volumsveränderbaren Körpers ist zur Lösung der oben gestellten Aufgabe vorgesehen, daß die Folien zumindest während des Schweißvorganges an der dem später fluidbefüllbaren Volumen gegenüberliegenden Seite des verschweißten Randes im wesentlichen parallel aneinandergepresst und auf der dem fluidbefüllbaren Volumen zugewandten Seite von Kräften freigehalten werden, welche die Folien aufeinander hin beaufschlagen. Bei dieser Art Verschweißung kann das Material der sich bildenden Schweißraupe nur auf eine Seite austreten und drängt somit die Folien auf dieser Seite auseinander und verändert somit die Grundrichtung des Folienmaterials in die gewünschte Winkelstellung zueinander.

Um den beschriebenen Vorgang der Ausrichtung der Folien noch zu unterstützen bzw. den Winkel über das Maß hinaus zu vergrößern, der durch das reine Verdrängen durch das Material der Schweißraupe hervorgerufen wird, kann gemäß einer vorteilhaften Ausführungsform des Verfahrens vorgesehen sein, daß die Folien auf der dem fluidbefüllbaren Volumen zugewandten Seite aufgespreizt werden.

Gemäß einer ersten Variante kann diese dadurch erzielt werden, daß die Folien zumindest während des Schweißvorganges an der dem fluidbefüllbaren Volumen zugewandten Seite mechanisch voneinander weg beaufschlagt werden.

Alternativ dazu können die Folien aber auch zumindest während des Schweißvorganges an der dem fluidbefüllbaren Volumen zugewandten Seite durch Beaufschlagung des Volumens zwischen den Folien mit Druckmittel auseinandergedrückt werden.

Gemäß einer weiteren vorteilhaften Ausführungsvariante der Erfindung kann vorgesehen sein, daß die Folien zumindest während des Schweißvorganges an der dem fluidbefüllbaren Volumen zugewandten Seite auf ihrer Außenseite mit Unterdruck relativ zum Volumen zwischen den Folien beaufschlagt und derart auseinandergesaugt werden.

Um dabei die gewünschte gegenseitige Ausrichtung der Folien zueinander, d.h. im gewünschten Winkel zueinander, zu gewährleisten, können die Folien durch den Unterdruck in Formen bzw. Schablonen hineingezogen werden.

In der nachfolgenden Beschreibung soll die Erfindung anhand der beigefügten Zeichnungen näher erläutert werden.

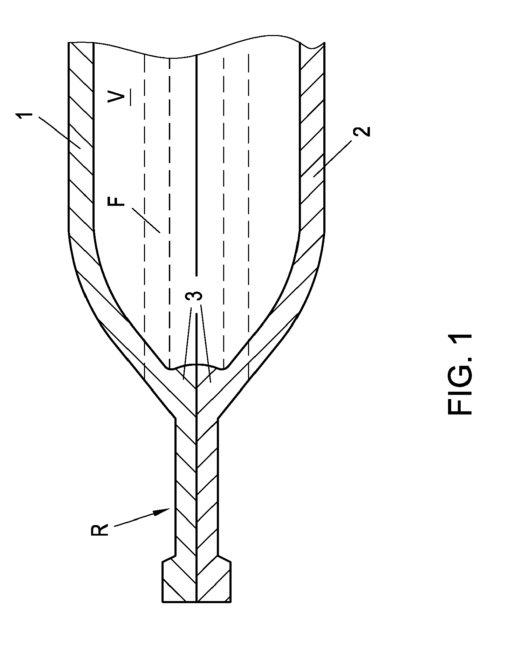

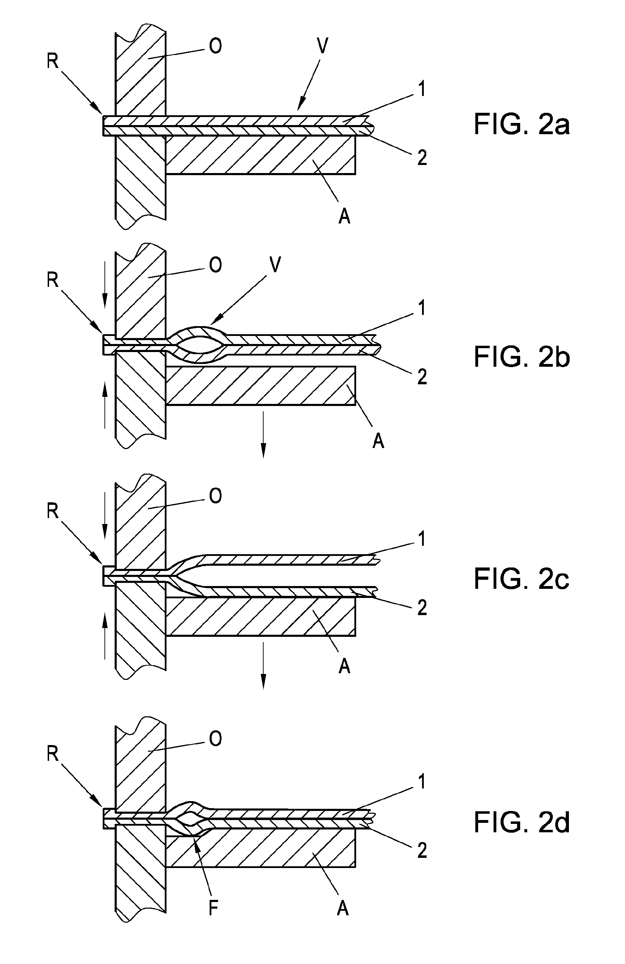

Dabei zeigt die Fig. 1 einen Seitenbereich einer erfindungsgemäßen Folienblase im Querschnitt, und Fig. 2a bis 2d sind schematische Darstellungen dieses Seitenbereiches für verschiedene Varianten von Herstellungsverfahren.

Ein erfindungsgemäßer fluidbefüllbarer, volumsveränderbarer Körper, beispielsweise eine aufblasbare Folienblase für einen Komfortsitz etwa für Autos, besteht meist aus zumindest zwei übereinanderliegenden Folien 1, 2, vorzugsweise aus Kunststoffmaterial. Diese Folien 1, 2 sind miteinander entlang zumindest einer geschlossenen Kurve, vorzugsweise des umlaufenden Randes R, verschweißt. Bei bislang üblichen Ausführungsformen solcher Folienblasen lagen die beiden Folien - wie durch die gestrichelte Darstellung einer Folienlage F symbolisiert - auch an der dem fluidbefüllbaren Volumen V zugewandten Seite des Schweißrandes R parallel übereinander.

Um nun aber Spannungen an der Schweißwurzel zu reduzieren, die beim teilweisen oder auch gänzlichen Befüllen der Folienblase mit Luft auftreten, liegen bei der erfindungsgemäßen Konstruktion die Folien 1, 2 an der dem fluidbefüllbaren Volumen V gegenüberliegenden Seite des verschweißten Randes R im wesentlichen parallel aneinander bzw. aufeinander und schließen auf der dem fluidbefüllbaren Volumen V zugewandten Seite miteinander einen Winkel größer 0°, vorteilhafterweise einen Winkel von zumindest etwa 30°, vorzugsweise von etwa 45°, ein. Zumindest ein Teil der Aufspreizung der Folien 1, 2 wird durch das auf der Seite des fluidbefüllbaren Volumens V austretende Material der Schweißraupe 3 bewirkt.

Wie bei der genaueren Darstellung des Schweißvorganges für die erfindungsgemäße Folienblase in Fig. 2a erkennbar ist, liegen die Folien 1, 2 zu Beginn des Schweißvorganges parallel zueinander und aufeinander, getragen von einer vorzugsweise aus Aluminium bestehenden Auflageplatte A. Im Bereich des späteren Schweißrandes R werden die Folien vom oberen Teil O der vorzugsweise HF-Schweißanlage aufeinandergepresst, welcher Teil O beispielsweise aus einem Messingflachmaterial bestehen kann, das mit der schmalen Seite auf den Folien 1, 2 steht. So wird dafür Sorge getragen, daß die Folien 1, 2 zumindest während des Schweißvorganges an der dem später fluidbefüllbaren Volumen V gegenüberliegenden Seite des verschweißten Randes R im wesentlichen parallel aneinandergepresst und auf der dem fluidbefüllbaren Volumen V zugewandten Seite von Kräften freigehalten werden, welche die Folien 1, 2 aufeinander hin beaufschlagen.

Letzteres kann beispielsweise dadurch begünstigt werden, daß - wie in Fig. 2b dargestellt ist - die Auflageplatte A abgesenkt und so den Folien 1, 2 die Möglichkeit gegeben wird, sich auseinanderzubewegen. Dadurch kann das Material der Schweißraupe 3 auf die Seite des Volumens V austreten und so einen Teil jener Ausrichtung bewirken, durch welche die Folien 1, 2 an der dem fluidbefüllbaren Volumen V zugewandten Seite miteinander einen Winkel größer 0° einschließen.

Vorteilhafterweise werden zum Erreichen größerer Winkel von etwa 30° oder vorzugsweise etwa 45° zwischen den Folien 1, 2 diese auf der dem fluidbefüllbaren Volumen V zugewandten Seite aufgespreizt. Das kann erzielt werden, in dem die Folien 1, 2 zumindest während des Schweißvorganges an der dem fluidbefüllbaren Volumen V zugewandten Seite mechanisch voneinander weg beaufschlagt oder aber durch Beaufschlagung des Volumens V zwischen den Folien 1, 2 mit Druckmittel auseinandergedrückt werden, was in Fig. 2c schematisch dargestellt ist. Mit gleicher Wirkung kann aber auch als alternative Ausführungsvariante vorgesehen sein, daß die Folien 1, 2 zumindest während des Schweißvorganges an der dem fluidbefüllbaren Volumen V zugewandten Seite auf ihrer Außenseite mit Unterdruck relativ zum Volumen zwischen den Folien 1, 2 beaufschlagt und derart in die gewünschte Winkelstellung relativ zueinander auseinandergesaugt werden. Auch bei dieser Art der Aufspreizung der Folien kann eine Absenkung der Auflageplatte A von Vorteil sein.

Dabei können zur Sicherstellung der gewünschten gegenseitigen Ausrichtung der Folien, d.h. im gewünschten Winkel, zueinander die Folien 1, 2 durch den Unterdruck in Formen oder Schablonen F, welche auch ein Teil der Auflageplatte A sein können, hineingezogen werden, wie das in Fig. 2d dargestellt ist.

## Patentansprüche

1. Fluidbefüllbarer, volumsveränderbarer Körper, bestehend aus zumindest zwei übereinanderliegenden, miteinander entlang zumindest einer geschlossenen Kurve, vorzugsweise des umlaufenden Randes, verschweißten Folien, vorzugsweise aus Kunststoffmaterial, **dadurch gekennzeichnet, daß** die Folien (1, 2) an der dem fluidbefüllbaren Volumen (V) gegenüberliegenden Seite des verschweißten Randes (R) m wesentlichen parallel aneinanderliegen und in unbefülltem Zustand des Körpers auf der dem fluidbefüllbaren Volumen (V) zugewandten Seite miteinander einen Winkel größer 0° einschließen.

2. Körper nach Anspruch 1, **dadurch gekennzeichnet, daß** die Folien (1, 2) einen Winkel von zumindest etwa 30°, vorzugsweise von etwa 45°, einschließen.

3. Verfahren zur Herstellung eines fluidbefüllbaren, volumsveränderbaren Körpers, durch Verschweißen von zumindest zwei übereinanderliegenden Folien, vorzugsweise aus Kunststoffmaterial, entlang zumindest einer geschlossenen Kurve, vorzugsweise des umlaufenden Randes, **dadurch gekennzeichnet, daß** die Folien (1, 2) zumindest während des Schweißvorganges an der dem später fluidbefüllbaren Volumen (V) gegenüberliegenden Seite des verschweißten Randes (R) im wesentlichen parallel aneinandergepresst und auf der dem fluidbefüllbaren Volumen (V) zugewandten Seite von Kräften freigehalten werden, welche die Folien (1, 2) aufeinander hin beaufschlagen.

4. Verfahren nach Anspruch 3, **dadurch gekennzeichnet, daß** die Folien (1, 2) auf der dem fluidbefüllbaren Volumen (V) zugewandten Seite aufgespreizt werden.

5. Verfahren nach Anspruch 4, **dadurch gekennzeichnet, daß** die Folien (1, 2) zumindest während des Schweißvorganges an der dem fluidbefüllbaren Volumen (V) zugewandten Seite mechanisch voneinander weg beaufschlagt werden.

6. Verfahren nach Anspruch 4, **dadurch gekennzeichnet, daß** die Folien (1, 2) zumindest während des Schweißvorganges an der dem fluidbefüllbaren Volumen (V) zugewandten Seite durch Beaufschlagung des Volumens zwischen den Folien (1, 2) mit Druckmittel auseinandergedrückt werden.

7. Verfahren nach Anspruch 4, **dadurch gekennzeichnet, daß** die Folien (1, 2) zumindest während des Schweißvorganges an der dem fluidbefüllbaren Volumen (V) zugewandten Seite auf ihrer Außenseite mit Unterdruck relativ zum Volumen zwischen den Folien (1, 2) beaufschlagt und derart auseinandergesaugt werden.

8. Verfahren nach Anspruch 7, **dadurch gekennzeichnet, daß** die Folien (1, 2) durch den Unterdruck in Formen bzw. Schablonen (F) hineingezogen werden.
